# EUROPÄISCHE PATENTANMELDUNG

(11) **EP 2 067 923 A1**
(43) Veröffentlichungstag der Anmeldung: **10.06.2009**
(21) Anmeldenummer: 07023381.2
(22) Anmeldetag: 03.12.2007
(51) Int. Cl.: E21B 7/02

(54) **Bohranlage un Bohrverfahren**

(71) Anmelder: BAUER Maschinen GmbH, 86529 Schrobenhausen (DE)
(72) Erfinder: Rieder, Otto, 85276 Pfaffenhofen (DE); Hackl, Stefan, 86551 Aichach (DE)
(74) Vertreter: Wunderlich, Rainer

(57) **Zusammenfassung**

Die Erfindung betrifft eine Bohranlage und ein zugehöriges Bohrverfahren, wobei ein Mast, ein Bohrschlitten, der entlang dem Mast verschiebbar geführt ist, und eine Antriebseinheit zum Verfahren des Bohrschlittens am Mast vorgesehen sind. Erfindungsgemäß weist die Antriebseinheit sowohl einen Hydraulikzylinderantrieb als auch einen Seilwindenantrieb auf. Der Bohrschlitten ist mit dem Hydraulikzylinderantrieb und mit dem Seilwindenantrieb koppelbar.

## Beschreibung

Die Erfindung betrifft eine Bohranlage mit einem Mast, einem Bohrschlitten, der entlang dem Mast verschiebbar geführt ist, und einer Antriebseinheit zum Verfahren des Bohrschlittens am Mast, gemäß dem Oberbegriff des Patentanspruchs 1.

Die Erfindung betrifft weiter ein Bohrverfahren zum Erstellen eines Bohrloches, bei dem ein erstes Gestänge und ein zweites Gestänge mit einem Bohrschlitten, welcher an einem Mast geführt wird, verfahren und insbesondere in den Boden eingebracht wird.

Bei derartigen Bohranlagen, welche insbesondere zum Tiefbohren eingesetzt werden, bestehen in der Regel zwei Hauptbetriebsarten. Diese sind einerseits das Bohren und andererseits das Auskleiden der Bohrung mit Futterrohren. Die erste Hauptbetriebsart, welche den größten Teil der Betriebszeiten beansprucht, dient zum Abbohren oder Ziehen von Bohrgestängeschüssen. Das Wechseln der Gestängeschüsse muss hier schnell erfolgen, da in dieser Zeit die Spülung der Bohrung unterbrochen ist. Dabei besteht die Gefahr, dass sich der Bohrkopf festsetzt.

Nach Erreichen einer gewissen Bohrtiefe muss die Bohrung mit Futterrohren ausgekleidet und außen gegen das Erdreich betoniert werden, um das Bohrloch zu stabilisieren und eine Kontamination der verschiedenen Erdschichten, etwa beim Gas- oder Erdölbohren, zu vermeiden. Dazu werden längere Gestängeschüsse eingebaut, miteinander verbunden und danach von außen betoniert. Hierzu sind für das Vorschubsystem große Zugkräfte notwendig.

Eine Bohranlage, bei der ein teleskopierbarer Mast mit einem Hydraulikzylinder verfahrbar ist, ist aus der EP 0 114 146 A bekannt.

Der Erfindung liegt die **Aufgabe** zugrunde, eine Bohranlage und ein Bohrverfahren anzugeben, mit welchen ein effizientes Arbeiten in den unterschiedlichen Hauptbetriebsarten möglich ist.

Nach der Erfindung wird die Aufgabe zum einen durch eine Bohranlage mit den Merkmalen des Anspruchs 1 und zum anderen mit einem Bohrverfahren mit den Merkmalen des Anspruchs 8 gelöst. Bevorzugte Varianten sind in den jeweils abhängigen Ansprüchen angegeben.

Die erfindungsgemäße Bohranlage ist dadurch gekennzeichnet, dass die Antriebseinheit sowohl einen Hydraulikzylinderantrieb als auch einen Seilwindenantrieb aufweist und dass der Bohrschlitten mit dem Hydraulikzylinderantrieb und mit dem Seilwindenantrieb koppelbar ist.

Mit den beiden unterschiedlichen Antrieben kann den unterschiedlichen Betriebsarten effizient Rechnung getragen werden. Der Hydraulikzylinderantrieb erlaubt schnelle Vorschub- und Verfahrgeschwindigkeiten, wie es insbesondere beim Abbohren oder Ziehen der Bohrgestängeschüsse vorteilhaft ist. Hingegen kann der Seilwindenantrieb beim Auskleiden der Bohrung, etwa durch Einbringen der Futterrohre, effektiv eingesetzt werden. Für diese Arbeiten wird ein Vorschubsystem mit großen Zugkräften benötigt. Dies kann in kostengünstiger und kompakter Weise durch einen Seilwindenantrieb erreicht werden, durch welchen insbesondere durch eine mehrfache Einscherung des Hubseiles entsprechend dem Flaschenzugprinzip hohe Zugkräfte bei verringerten Vorschubgeschwindigkeiten bereitgestellt werden.

Grundsätzlich kann der Bohrschlitten während beider Betriebsarten sowohl mit dem Hydraulikyzlinderantrieb als auch mit dem Seilwindenantrieb verbunden sein. Gemäß der Erfindung ist es jedoch besonders zweckmäßig, dass eine Kopplungseinrichtung vorgesehen ist, mit welcher der Bohrschlitten wechselweise mit dem Hydraulikzylinderantrieb und dem Seilwindenantrieb verbindbar ist. Die Kopplungseinrichtung kann dabei von Hand, etwa durch einschiebbare Haltebolzen, oder automatisch betrieben sein, etwa durch entsprechende Hydraulikzylinder, welche einen Riegelmechanismus am Bohrschlitten betätigen.

Besonders bevorzugt ist es nach der Erfindung, dass der Mast ein Mastgrundelement und mindestens ein Mastteleskopelement aufweist, welches teleskopierbar im Mastgrundelement geführt ist, und dass der Hydraulikzylinderantrieb zum Verfahren des mindestens einen Mastteleskopelementes mit diesem koppelbar ist. Auf diese Weise kann der Hydraulikzylinderantrieb nicht nur zum Verfahren des Bohrschlittens, sondern auch für eine Teleskopierung des Mastes eingesetzt werden. Eine Teleskopierbarkeit des Mastes ist insbesondere beim Errichten der Bohranlage zweckmäßig, wobei der Mast aus einer im Wesentlichen horizontalen Transportposition in die im Wesentlichen vertikale Betriebsposition verschwenkt wird. Je kleiner der Mast bei diesem Vorgang ist, umso geringer sind die benötigten Aufstellkräfte. Darüber hinaus ist ein Ausfahren des Mastes sinnvoll, wenn nach dem Bohren zum Auskleiden der Bohrung Futterrohre mit Gestängeschüssen verwendet werden, deren Länge größer als die Länge der Bohrgestängeschüsse ist.

Eine hohe Flexibilität hinsichtlich des Verfahrweges des Bohrschlittens wird erfindungsgemäß dadurch erreicht, dass der Bohrschlitten eine erste Führung zum Führen entlang dem Mastgrundelement und mindestens eine weitere Führung zum Führen entlang dem mindestens einen Mastteleskopelement aufweist. Bedingt durch die Teleskopierbarkeit weist das Mastteleskopelement eine andere, in der Regel kleinere Form auf als das Mastgrundelement. Um hierbei eine gute Führung des Bohrschlittens zu gewährleisten, weist das Mastgrundelement eine andere erste Führung auf als die zweite Führung am Mastteleskopelement. Diese können insbesondere Führungsschienen oder Führungsnuten sein. Am Bohrschlitten sind entsprechend Gleitschuhe oder Führungsschuhe für die beiden Führungen vorgesehen, so dass der Bohrschlitten bei einem ausgefahrenen Mast übergangslos vom Mastgrundelement zum Mastteleskopelement verfahrbar ist. Entsprechend der Anzahl der Mastteleskopelemente können auch mehr als zwei Führungen vorgesehen sein. '

Weiter ist es erfindungsgemäß, dass der Seilwindenantrieb eine Seilwinde, welche am Bett der Bohranlage angeordnet ist, und ein Seil aufweist, welches über eine Rollenanordnung am Mastkopf des Mastes geführt ist. Mit dieser Anordnung können über den Mastkopf hohe Zugkräfte auf den Bohrschlitten ausgeübt werden. Dies gilt insbesondere dann, wenn die Rollenanordnung gemäß dem Prinzip eines Flaschenzuges für eine zusätzliche Kraftübersetzung sorgt. Die Anordnung der Seilwinde am Bett der Bohranlage erlaubt eine stabile Konstruktion und eine direkte Krafteinleitung in das stabile Anlagenbett.

Dabei ist es besonders bevorzugt, dass der Seilantrieb zum Verschwenken des Mastes in oder aus der Vertikalen mit dem Mast verbindbar ist. Auf diese Weise kann der Seilwindenantrieb auch zum Aufstellen des Mastes aus der im Wesentlichen horizontalen Transportposition in die vertikale Betriebsposition verwendet werden. Hierzu ist das Seil vom Bohrschlitten zu lösen und an einem vorgesehenen Befestigungspunkt an der rückwärtigen Strebenanordnung des Mastes anzubringen.

Gemäß der Erfindung wird eine stabile Konstruktion dadurch unterstützt, dass der Hydraulikzylinderantrieb mindestens einen Hydraülikzylinder aufweist, der am Fuß des Mastes angeordnet ist. Neben diesem Anlenkpunkt am Fuß des Mastes weist der Hydraulikzylinder einen weiteren Anlenkpunkt auf, welcher lösbar am Bohrschlitten angebracht ist. Zur Teleskopierbarkeit des Mastteleskopelementes kann so der lösbare Befestigungspunkt des Hydraulikzylinders an das Mastteleskopelement gekoppelt werden, um diesen ein- oder auszufahren.

Das erfindungsgemäße Bohrverfahren ist dadurch gekennzeichnet, dass der Bohrschlitten zum Einbringen des ersten Gestänges mit einem Hydraulikzylinderantrieb verfahren wird und dass der Bohrschlitten zum Einbringen des zweiten Gestänges mit einem Seilwindenantrieb verfahren wird. Der Hydraulikzylinderantrieb erlaubt ein schnelles Verfahren, was insbesondere für die Innenbohrgestängeschüsse vorteilhaft ist. Hingegen erlaubt der Seilwindenantrieb das Aufbringen hoher Vorschubkräfte, wie es beim Einbringen von Futterrohren notwendig ist.

Nach der Erfindung ist es dabei vorteilhaft, dass das erste Gestänge ein Innenbohrgestänge und das zweite Bohrgestänge ein Außenrohrgestänge ist. An dem Innenrohrgestänge befindet sich am bodenseitigen Ende der Bohrkopf. Das Außenrohrgestänge kann zur Auskleidung und zum Ausbetonieren des Bohrloches eingesetzt werden, um dieses zu sichern.

Weiterhin ist es gemäß der Erfindung bevorzugt, dass das erste Gestänge aus ersten Gestängeschüssen und das zweite Gestänge aus zweiten Gestängeschüssen aufgebaut sind, dass die ersten Gestängeschüsse eine Länge aufweisen, die kleiner als die Länge der zweiten Gestängeschüsse ist, dass vor dem Einbringen des zweiten Gestänges ein Mastteleskopelement an einem Mastgrundelement zur Verlängerung ausgefahren wird und dass das zweite Gestänge schussweise in den Boden durch Verfahren des Bohrschlittens entlang dem verlängerten Mast eingebracht wird. Alternativ können auch die Schüsse des ersten Gestänges länger sein als die des zweiten Gestänges.

Das erfindungsgemäße Bohrverfahren erlaubt einen effektiven Betrieb in den beiden Hauptbetriebsarten. So kann etwa zum Abbohren mit einem Bohrgestänge der Bohrschlitten ausschließlich entlang des Mastgrundelementes verfahren werden. Hier können kürzere Bohrgestängeschüsse verwendet werden. Würden in der anderen Hauptbetriebsart, etwa zum Auskleiden der Bohrung, längere Futterrohre als zweites Gestänge eingesetzt, so kann für diese längeren Gestängeschüsse der Mast ausgefahren werden.

Gemäß der Erfindung wird insgesamt eine Bohranlage und ein Bohrverfahren erreicht, wobei die Bohranlage im Vergleich zu herkömmlichen Bohranlagen mit vergleichbarer Leistung kostengünstiger ist. Denn um etwa mit einem Seilwindenantrieb sowohl die hohen Vorschubgeschwindigkeiten eines Hydraulikzylinders und gleichzeitig die notwendigen hohen Vorschubkräfte zu erreichen, wäre eine vielfach höhere Dimensionierung des Seilwindenantriebes notwendig.

Die Erfindung wird weiter anhand von bevorzugten Ausführungsbeispielen beschrieben, welche schematisiert in den Zeichnungen dargestellt sind. In den Zeichnungen zeigen:
- Fig. 1: eine perspektivische Ansicht einer ersten erfindungsgemäßen Bohranlage;
- Fig. 2: eine Seitenansicht der Bohranlage von Fig. 1;
- Fig. 3: eine perspektivische Ansicht der Bohranlage von Fig. 1 mit einem verschwenkten Mast;
- Fig. 4: eine perspektivische Ansicht einer weiteren erfindungsgemäßen Bohranlage mit Ausrüstung;
- Fig. 5: eine perspektivische Ansicht einer weiteren erfindungsgemäßen Bohranlage und
- Fig. 6: eine Vorderansicht der Bohranlage von Fig. 5.

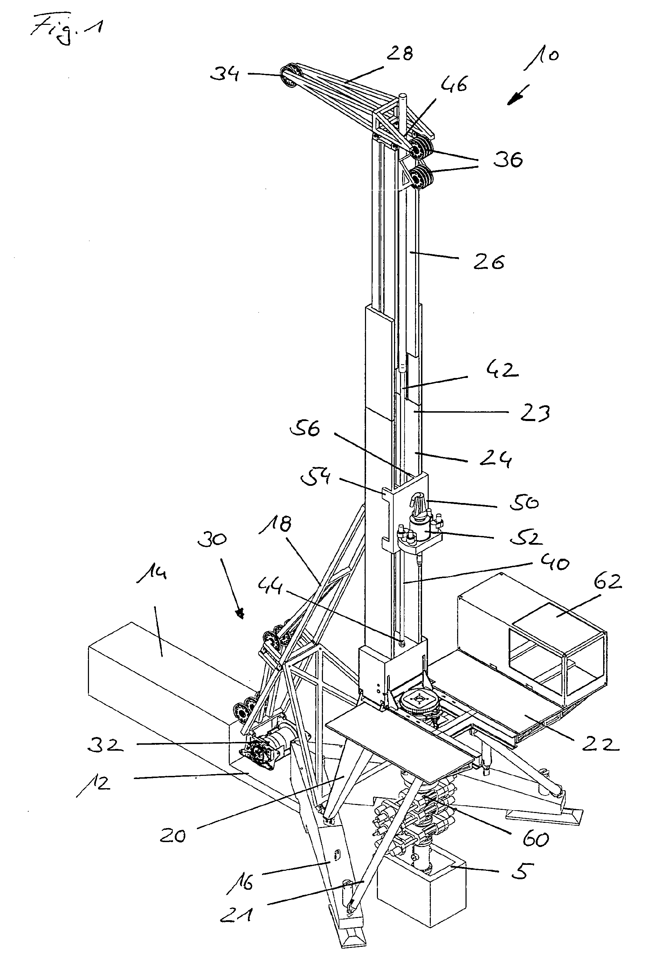

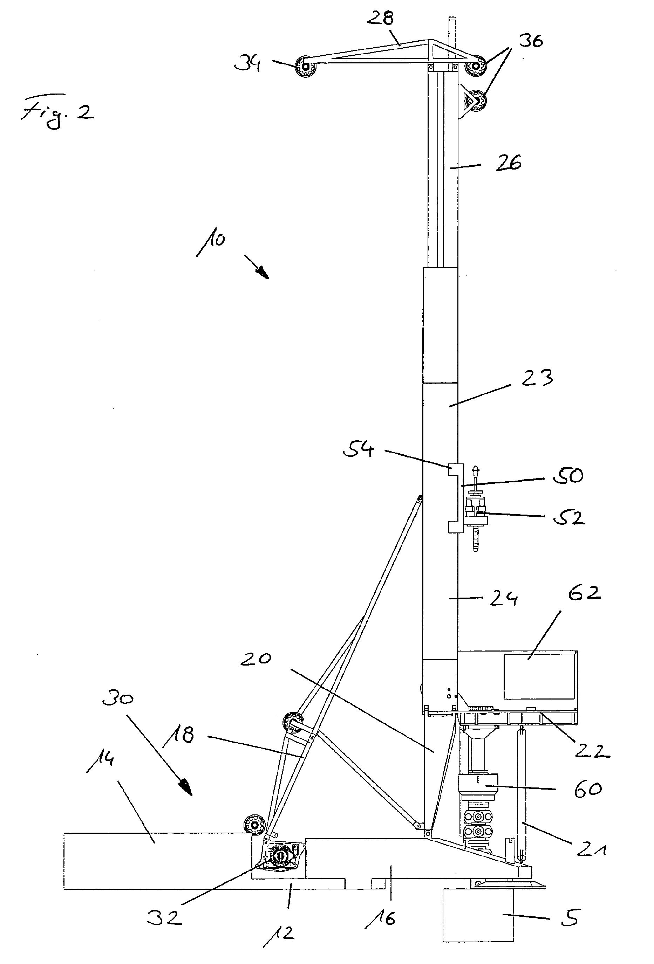

Die Figuren 1 und 2 zeigen eine erste erfindungsgemäße Bohranlage 10 mit einem Bett 12, in welchem eine containerförmige Aggregatseinheit 14 für die Energie- und Hydraulikversorgung angeordnet ist. Am gegenüberliegenden Ende des Bettes 12 ist eine gabelförmige Bodenstütze 16 vorgesehen, welche sich um eine Bohrlochfassung 5 herum erstreckt. Auf den Schenkeln der gabelförmigen Bodenstütze 16 ist ein Mast 23 über ein V-förmiges Zweibein 20 schwenkbar angelenkt. Auf der von der Bohrlochfassung 5 abgewandten Rückseite des Mastes 23 ist dieser über eine Strebenanordnung 18 mit einem sogenannten A-Bock gegenüber dem Bett 12 abgestützt.

Am Übergang des Mastes 23 zum Zweibein 20 ist der im Wesentlichen horizontal verlaufende Bohrtisch 22 mit einem kastenförmigen Leitstand 62 angebracht. Unterhalb des Bohrtisches 22, welcher über Streben 21 gegenüber der gabelförmigen Bodenstütze 16 abgestützt ist, ist in bekannter Weise ein Blowout-Preventer 60 mit entsprechenden Klemmeinrichtungen für ein Verschrauben und Brechen der einzelnen Gestängeschüsse vorgesehen.

Beim dargestellten Ausführungsbeispiel der Bohranlage 10 ist der Mast 23 teleskopierbar mit einem Mastgrundelement 24 ausgebildet, in welchem ein Mastteleskopelement 26 verschiebbar geführt ist. Der Mastgrundkörper 24 und das Mastteleskopelement 26 weisen an ihren Vorderseiten schienenartige Führungen auf, entlang welchen ein Bohrschlitten 50 mit einem Drehkopf 52 entlang des Mastes 23 verschiebbar geführt ist. An seiner zum Mast gerichteten Seite weist der Bohrschlitten 50 Führungsschuhe als eine erste Führung 54 und eine zweite Führung 56 auf, welche mit der Führung am Mastgrundelement 24 bzw. mit der Führung am Mastteleskopelement 26 für eine zuverlässige lineare Verschiebung des Bohrschlittens 50 sorgen.

Nach der Erfindung ist der Bohrschlitten 50 sowohl durch einen Hydraulikzylinderantrieb 40 als auch durch einen Seilwindenantrieb 30 verfahrbar. Der Seilwindenantrieb 30 weist eine trommelförmige Seilwinde 32 mit einem Drehantrieb auf. Die Seilwinde 32 ist am Bett 12 zwischen der gabelförmigen Bodenstütze 16 und der Aggregateinheit 14 angeordnet. Über eine Umlenkrolle 34 am Mastkopf 28 wird ein hier nicht dargestelltes Seil über eine Rollenanordnung 36 entlang dem Mast 23 mit dem Bohrschlitten 50 verbunden. Durch eine mehrfache Einscherung des Seiles in der Rollenanordnung 36 wird zum Verschieben des Bohrschlittens 50 eine Erhöhung der Zugkraft gemäß dem Prinzip eines Flaschenzuges bewirkt. In gleichem Maße wie sich die Zugkraft erhöht, verringert sich die Verschiebegeschwindigkeit des Seilwindenantriebes 30.

Erfindungsgemäß ist ein schnelleres Verschieben bei geringeren Zugkräften der Bohrschlitten 50 mit dem Hydraulikzylinderantrieb 40 koppelbar. Der Hydraulikzylinderantrieb 40 weist einen Hydraulikzylinder 42 auf, welcher sich entlang dem im Querschnitt U-förmigen Mast 23 in dessen Innenraum erstreckt. Der Hydraulikzylinder 42 weist einen unteren Befestigungspunkt 44 und einen oberen Befestigungspunkt 46 auf. Mit diesen Befestigungspunkten 44, 46 kann der Hydraulikzylinder 42 wahlweise am Fuß des Mastes 23, am Bohrschlitten 50 oder an dem verschiebbaren Mastteleskopelement 26 angebunden sein.

Nach der Erfindung kann das Mastteleskopelement 26 insbesondere dann aus dem Mastgrundelement 24 zur Verlängerung des Mastes 23 ausgefahren werden, wenn längere Gestängeschüsse abgebohrt oder gezogen werden müssen. Abhängig von der gewünschten Vorschubgeschwindigkeit und den notwendigen Zugkräften kann dabei der Bohrschlitten 50 entweder durch den Seilwindenantrieb 30 oder durch den Hydraulikzylinderantrieb 40 betrieben werden.

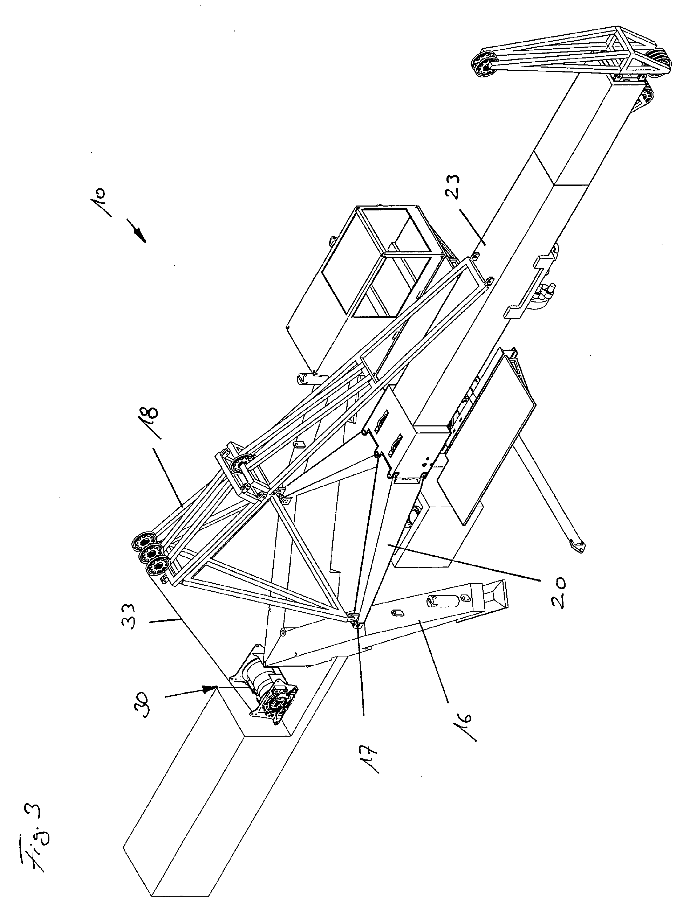

Fig. 3 zeigt die Bohranlage 10 in der eingeklappten Montagestellung, bei welcher der Mast 23 über die Schwenkgelenke 17 am unteren Ende des Zweibeins 20 an der gabelförmigen Bodenstütze 16 angelenkt sind. Zur Errichtung des Mastes 23, welcher sich zur Verminderung der Kräfte in seinem eingeschobenen Zustand befindet, kann der Seilwindenantrieb 30 eingesetzt werden. Hierzu ist das nur teilweise dargestellte Seil 33 über die geklappte Strebenanordnung 18 an dem Mast 23 angelenkt. Auf diese Weise kann der Mast 23 aus seiner horizontalen Transportstellung in die vertikale Betriebsstellung und umgekehrt verschwenkt werden.

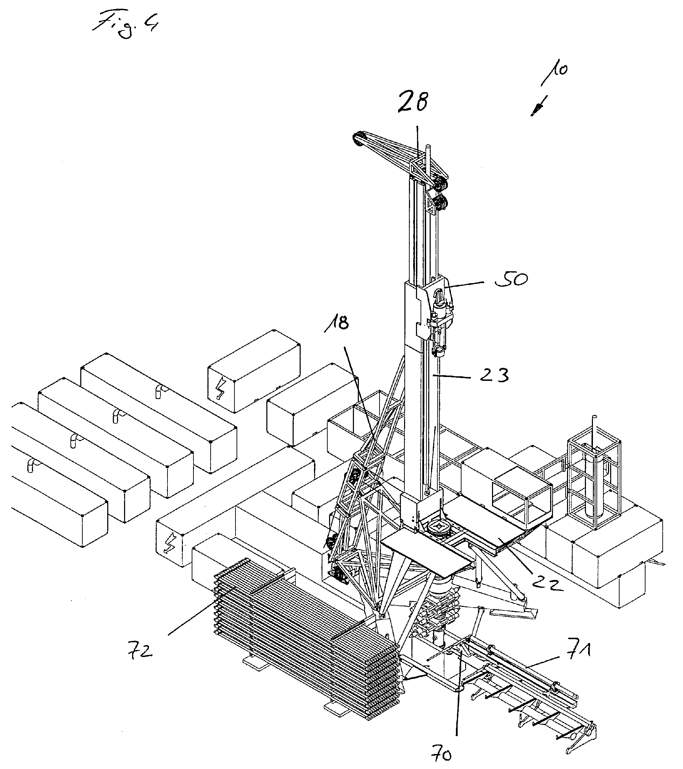

Eine weitere Bohranlage 10 ist in Fig. 4 dargestellt. Diese Bohranlage 10 entspricht im Wesentlichen der zuvor beschriebenen Bohranlage. Im Unterschied hierzu ist eine andere Strebenanordnung 18 mit einem kastenförmigen Zwischenelement gewählt.

Die Bohranlage 10 gemäß Fig. 4 ist mit der an Bohrstellen üblichen Ausrüstung dargestellt. Erste Gestängeschüsse 71 werden mittels einer an sich bekannten Handhabungseinrichtung 70 aus einer horizontalen Ausgangslage in eine vertikale Position geschwenkt und auf die Höhe des Bohrtisches 22 angehoben. Mittels des Bohrschlittens 50 können die ersten Bohrgestängeschüsse 71 zum Bilden des ersten Gestänges miteinander verschraubt und schussweise in den Boden eingebracht werden. In umgekehrter Reihenfolge erfolgt die Demontage des ersten Gestänges.

Weiterhin kann mit dem Bohrschlitten 50 ein zweites Gestänge eingebracht werden, welches aus zweiten Gestängeschüssen 72 aufgebaut ist. In der Darstellung gemäß Fig. 4 sind diese in einem Rohrgestängelager angeordnet. Die Länge der zweiten Gestängeschüsse 72 ist größer als die Länge der ersten Gestängeschüsse 71. Zum Verfahren der längeren zweiten Gestängeschüsse 72 kann der Mast 23, wie dargestellt, ausgefahren werden, so dass der Bohrschlitten 50 bei Verfahren zum oberen Mastkopf 28 auch die zweiten Gestängeschüsse 72 aufnehmen und in den Boden einbringen beziehungsweise herausfahren kann.

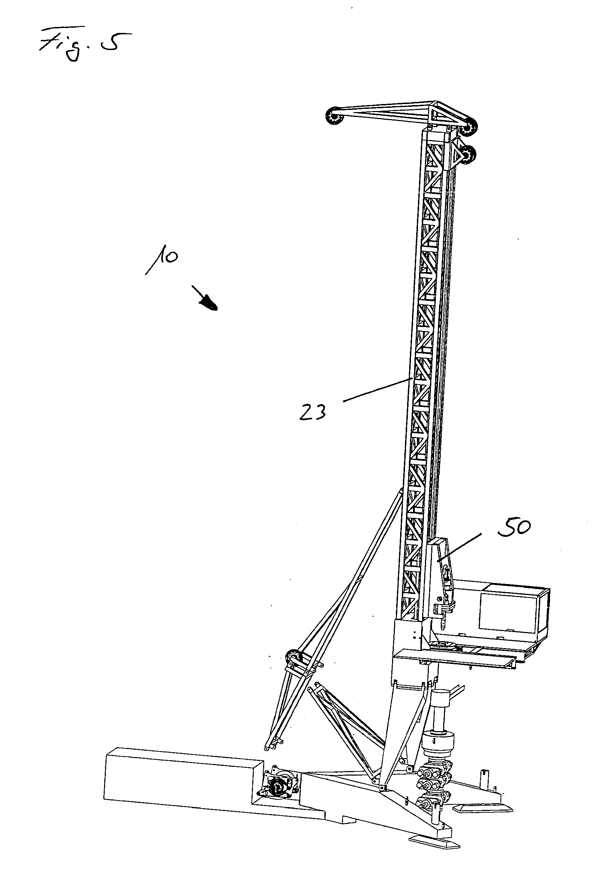

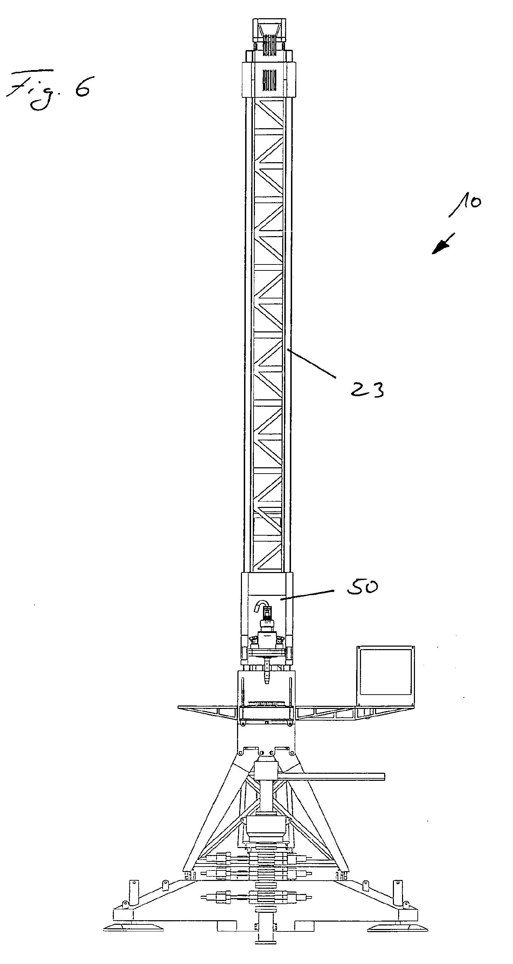

In den Figuren 5 und 6 ist eine weitere erfindungsgemäße Bohranlage 10 dargestellt. Diese entspricht im Wesentlichen den vorbeschriebenen Bohranlagen, wobei nachfolgend nur auf unterschiedliche Gestaltungen von Details eingegangen wird.

Bei der Bohranlage 10 gemäß den Figuren 5 und 6 ist ein einteiliger Mast 23 mit einer festen Mastlänge vorgesehen. Die Länge des Mastes 23 ist dabei entsprechend der größten zu erwartenden Länge eines Gestängeschusses ausgebildet. Bei kürzeren Gestängeschüssen verfährt der Bohrschlitten 50 jeweils nur bis zu der notwendigen Höhe am Mast 23.

## Patentansprüche

1. Bohranlage mit
- einem Mast (23),
- einem Bohrschlitten (50), der entlang dem Mast (23) verschiebbar geführt ist, und
- einer Antriebseinheit zum Verfahren des Schlittens (50) am Mast (23),
**dadurch gekennzeichnet,**
- **dass** die Antriebseinheit sowohl einen Hydraulikzylinderantrieb (40) als auch einen Seilwindenantrieb (30) aufweist und
- **dass** der Bohrschlitten (50) mit dem Hydraulikzylinderantrieb (40) und mit dem Seilwindenantrieb (30) koppelbar ist.

2. Bohranlage nach Anspruch 1,
**dadurch gekennzeichnet,**
**dass** eine Kopplungseinrichtung vorgesehen ist, mit welcher der Bohrschlitten (50) wechselweise mit dem Hydraulikzylinderantrieb (40) und dem Seilwindenantrieb (30) verbindbar ist.

3. Bohranlage nach Anspruch 1 oder 2,
**dadurch gekennzeichnet,**
- **dass** der Mast (23) ein Mastgrundelement (24) und mindestens ein Mastteleskopelement (26) aufweist, welches teleskopierbar im Mastgrundelement (24) geführt ist, und
- **dass** der Hydraulikzylinderantrieb (40) zum Verfahren des mindestens einen Mastteleskopelementes (26) mit diesem koppelbar ist.

4. Bohranlage nach Anspruch 3,
**dadurch gekennzeichnet,**
**dass** der Bohrschlitten (50) eine erste Führung (54) zum Führen entlang dem Mastgrundelement (24) und mindestens eine weitere, zweite Führung (56) zum Führen entlang dem mindestens einen Mastteleskopelement (26) aufweist.

5. Bohranlage nach Anspruch 3 oder 4,
**dadurch gekennzeichnet,**
**dass** der Seilwindenantrieb (30) eine Seilwinde (32), welche am Bett (12) der Bohranlage (10) angeordnet ist, und ein Seil (33) aufweist, welches über eine Rollenanordnung (36) am Mastkopf (28) geführt ist.

6. Bohranlage nach einem der Ansprüche 1 bis 5,
**dadurch gekennzeichnet,**
**dass** der Seilwindenantrieb (30) zum Verschwenken des Mastes (23) mit dem Mast (23) verbindbar ist.

7. Bohranlage nach einem der Ansprüche 1 bis 6,
**dadurch gekennzeichnet,**
**dass** der Hydraulikzylinderantrieb (40) mindestens einen Hydraulikzylinder (42) aufweist, der am Fuß des Mastes (23) angeordnet ist.

8. Bohrverfahren, insbesondere zur Durchführung mit einer Bohranlage (10) nach einem der Ansprüche 1 bis 7, zum Erstellen eines Bohrloches, bei dem ein erstes Gestänge und ein zweites Gestänge mit einem Bohrschlitten (50), welcher an einem Mast geführt wird, verfahren und insbesondere in den Boden eingebracht werden,
**dadurch gekennzeichnet,**
**dass** der Bohrschlitten (50) zum Einbringen des ersten Gestänges mit einem Hydraulikzylinderantrieb (40) verfahren wird und
**dass** der Bohrschlitten (50) zum Einbringen des zweiten Gestänges mit einem Seilwindenantrieb (30) verfahren wird.

9. Bohrverfahren nach Anspruch 8,
**dadurch gekennzeichnet,**
**dass** das erste Gestänge ein Innenbohrgestänge und das zweite Gestänge ein Außenrohrgestänge ist.

10. Bohrverfahren nach Anspruch 8 oder 9,
**dadurch gekennzeichnet,**
- **dass** das erste Gestänge aus ersten Gestängeschüssen (71) und das zweite Gestänge aus zweiten Gestängeschüssen (72) aufgebaut sind,
- **dass** die ersten Gestängeschüsse (71) eine Länge aufweisen, die kleiner als die Länge der zweiten Gestängeschüsse (72) ist,
- **dass** vor dem Einbringen des zweiten Gestänges (72) der Mast (23) verlängert wird und
- **dass** das zweite Gestänge (72) schussweise in den Boden durch Verfahren des Bohrschlitzes (50) entlang dem verlängerten Mast (23) eingebracht wird.
